# EUROPEAN PATENT SPECIFICATION

(11) **EP 1 200 893 B1**
(45) Date of publication and mention of the grant of the patent: **24.09.2003**
(21) Application number: 99931400.8
(22) Date of filing: 28.07.1999
(51) Int. Cl.: G06F 9/46

(54) **COMMUNICATION-ORIENTED OPERATING SYSTEM HAVING IMPROVED MEMORY MANAGEMENT**
KOMMUNIKATIONS-ORIENTIERTES BETRIEBSSYSTEM MIT VERBESSERTER SPEICHERVERWALTUNG
SYSTEME DE FONCTIONNEMENT ORIENTE COMMUNICATION PRESENTANT UNE GESTION AMELIOREE DE MEMOIRE

(43) Date of publication of application: 02.05.2002
(73) Proprietor: SUN MICROSYSTEMS, INC., Palo Alto, California 94303 (US)
(72) Inventor: BOULE, Ivan, F-75011 Paris (FR)
(74) Representative: Plaçais, Jean-Yves
(86) International application number: IB9901336
(87) International publication number: WO01008009

(56) References cited:
- DRAPER J T ET AL: "THE M-CACHE: A MESSAGE-HANDLING MECHANISM FOR MULTICOMPUTER SYSTEMS" PARALLEL COMPUTING,NL,ELSEVIER PUBLISHERS, AMSTERDAM, vol. 20, no. 9, 1 September 1994 (1994-09-01), pages 1269-1288, XP000461761 ISSN: 0167-8191
- JON B. POSTEL: "Internet Protocol" REQUEST FOR COMMENTS, no. 791, September 1981 (1981-09), XP002136189 Information Sciences Institute, University of Southen California, Marina del Rey, California, USA.
- RICHARD F. RACHID: "An Inter-Process Communication Facility For Unix" PROCEEDINGS OF THE IFIP WORKING GROUP 6.4, INTERNATIONAL WORKSHOP ON LOCAL NETWORKS, 27 - 29 August 1980, pages 319-354, XP002137140 Zürich, Switzerland
- JON B. POSTEL: "Transmission Control Protocol" REQUEST FOR COMMENTS, no. 793, September 1981 (1981-09), XP002137141 Information Sciences Institute, University of Southern California, Marina del Rey, California, USA.
- JOCHEN LIEDTKE: "Improving IPC kernel design" PROCEEDINGS OF THE FOURTEENTH ACM SYMPOSIUM ON OPERATING SYSTEMS PRINCIPLES, 5 - 8 December 1993, pages 175-188, XP002137142 Asheville, United States of America
- CHARLES L. HEDRICK: "Introduction to the Internet Protocols" INTERNET DOCUMENT, [Online] 3 October 1988 (1988-10-03), XP002137143 RUTGERS University, New Jersey, USA. Retrieved from the Internet: <URL:ftp://rtfm.mit.edu/pub/net/internet.t ext> [retrieved on 2000-05-08]

## Description

This invention relates to computer network technology for transmitting messages between local applications on a first computer station and distant applications on a second computer station, as disclosed in Draper J.T. et al.: " The M-Cache: A Message-Handling Mechanism for Multicomputer Systems"; Parallel Computing, NL, Elsevier Publishers, Amsterdam, vol. 20, no. 9, 1.9.1994, pages 1269-1288.

Operating systems like CHORUS OS (SUN MICROSYSTEMS, ST QUENTIN EN YVELINES, France) are flexible as to the hosting hardware, and provide efficient and reliable communication facilities between stations, through a subsystem named "Inter Process Communication" (IPC). More precisely, the IPC subsystem of the ChorusOS kernel supplies the application layers with two main location-transparent and message-oriented communication services, namely:
- a Remote Procedure Call (RPC) service through which a client sends a request of any size to a server and is blocked (in waiting state) until it receives a reply back from the server.
- an asynchronous communication service (ACS) which allows applications to exchange asynchronous reliable messages through respective end-points (also named "ports" hereinafter).

When designing and implementing the reliable network protocols which support the aforementioned IPC services, memory management issues are of peculiar importance. One must first avoid network memory deadlock situations ; it is also desirable to optimize memory usage by minimizing the amount of wasted network memory.

This invention as defined in the appended claims proposes advances to address these issues.

The invention applies to a communication-oriented operating system for a computer station. The operating system has memory management functions, message processing functions, and a communication module, hereinafter termed Inter Process Communication (IPC system or sub-system). The communication module cooperates with the message processing functions and the memory management functions to handle exchange of messages between local applications on said computer station and distant applications on a remote computer station. Additionally, the message processing functions are capable of processing a service portion (header) of messages to and from the computer station.

In accordance with a first feature of the invention, the communication module is arranged for cooperating with the memory management functions to reserve a first portion of memory and a second portion of memory. It is also arranged for cooperating with the memory management functions and the message processing functions, in accordance with a short storage condition, to put selected ones of the messages to be transmitted in the first portion of memory, and to put selected ones of the messages received in the second portion of memory. The selected short storage messages are termed "temporary" messages. The short storage condition may be represented by a mark, in a least certain ones of the temporary messages. The communication module may process the non-selected ones of the messages ("long-lived" messages) in accordance with a flow-control mechanism.

This reduces the risk of a distributed memory deadlock, in which reply messages cannot be processed due to saturation of memory by request messages.

In a presently preferred embodiment, the communication module comprises a procedure-processing sub-unit, or remote procedure call module, adapted to handle exchange of request messages and reply messages between local applications on the computer station and distant applications on the remote computer station. The temporary messages comprise the reply messages of the remote procedure call module.

Usually, the communication module is generally capable of fragmenting messages emitted by local applications, e.g. when they exceed a selected size. This fragmentation function preferably makes use of the first feature of the invention, as follows. When a message is fragmented into a first and a second message portions, the first portion is transmitted as a (potentially) long-storage message to the remote host computer station. In response to a further data demand from the remote host computer station, the second portion is then transmitted as a short-storage message to the remote host computer station.

Normally, the communication module requests memory allocation from the memory management functions by units, related to a network message size. This may lead to a first specific fragmentation related to the network message size abilities.

In accordance with a second feature of this invention, the communication module is arranged for fragmenting messages to be sent which satisfy a selected condition (related to network message size abilities and/or to an estimated time of presence of the message in the memory of the remote computer station, before delivery). The message fragments are transmitted one by one to the remote computer station. The communication module is also arranged, upon receipt of successive message fragments, for delivering them one by one to their destination application.

A third feature of this invention is related to internal memory management in the station. The memory management functions allocate memory by buffer units.

The communication module is arranged to respond to an application presenting a message transmission request by:
- asking for allocation of a first buffer unit from the memory management functions,
- blocking that application in waiting state, if the first buffer unit is not allocated,
- upon effective allocation of the first buffer unit, putting therein at least a portion of the message (and unblocking the application from waiting state, if appropriate),
- if only a portion of the message may be contained in the first buffer unit,
   * asking from the memory management functions for allocation of enough further buffer units to contain the rest of the message,
   * upon rapid effective allocation of the further buffer units, using these for transmission of the rest of the message,
   * otherwise, switching to a fragmented mode of transmission of the rest of the message, preferably using the allocated first buffer unit.

The above features of the invention may also be defined in terms of methods.

Other characteristics and advantages of the invention will appear in the light of the detailed description below and the associated drawings in which:
- figure 1 is a general diagram of computer stations in which this invention is applicable ;
- figure 1A shows the software and memory organisation in station S1 of figure 1 ;
- figure 2 more precisely shows the software and memory organisation in stations S1 and S2 of figure 1, in connection with the IPC service ;
- figure 3 more precisely shows the software and memory organisation in stations S1 and S2 of figure 1, in connection with the RPC operation of the IPC service ;
- figure 4 shows the software and memory organisation in stations S1 and S2 of figure 1, in connection with the RPC operation of the IPC service, in accordance with a first feature of this invention ;
- figure 5 shows the software and memory organisation in stations S1, in connection with the RPC operation of the IPC service, in accordance with this invention, for two different applications A10 and A11 ;
- figure 6 is a flow chart showing a development of the first feature of this invention ;
- figure 7 is a flow chart showing a second feature of this invention ;
- figure 8 is a space/time diagram illustrating the exchange of messages in accordance with figure 7 ; and
- figure 9 is a flow chart showing a third feature of this invention.

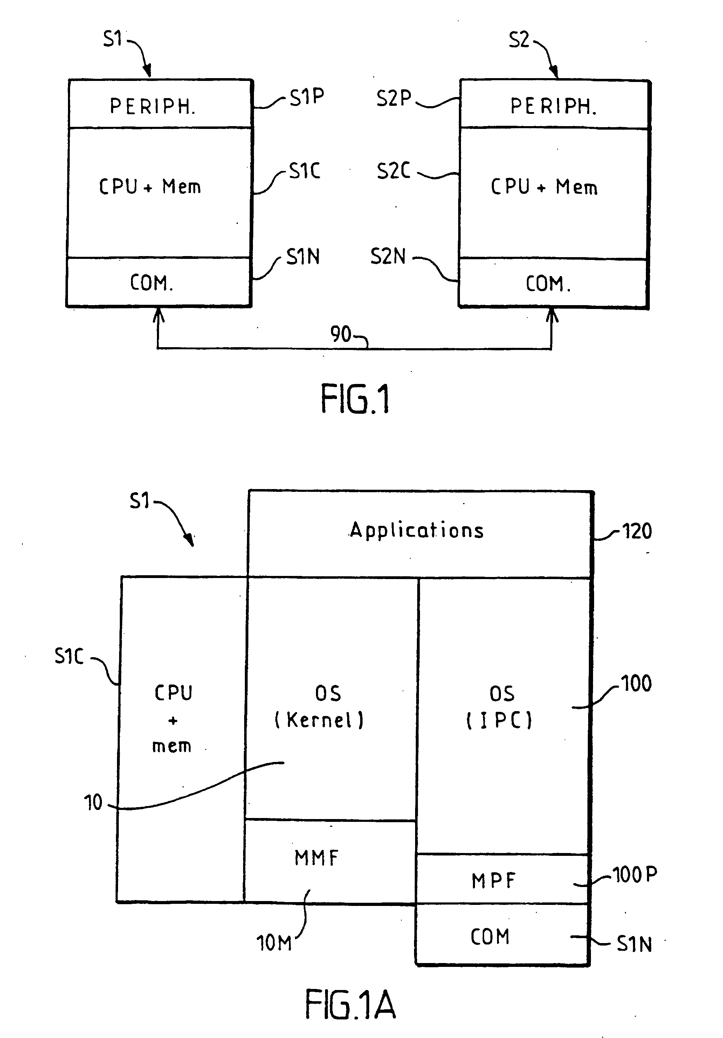

Fig. 1 generally shows computer stations or hosts S1 and S2, interconnected through a network 90. Each station has basically a central processing unit with its memory (S1C,S2C). It also has communication equipment (S1N,S2N) adapted to the type of network 90 being used. It further includes peripherals (S1P,S2P), which may include dedicated equipment, and/or usual computer peripherals, i.e. a mass memory, hard disk or equivalent, and input/output devices like a display, a keyboard, a pointer, where appropriate.

On Fig. 1A, in the memory, station S1 has an OS kernel 10, with an OS IPC service 100, and applications 120. The OS, including IPC service 100, has access to memory management functions 10M. More precisely, the OS includes a memory allocator, capable of allocating memory basically page by page (usually 4 kO), and then more finely. The IPC service uses the allocator for devoting memory to various communication purposes.

IPC service 100 also cooperates with messages processing functions 100P, which ensure the connection with communication equipment S1N, including appropriate device drivers. The message processing functions are also in charge of suitably encapsulating messages into packets for transmission on the network, and, conversely, of de-encapsulating packets received from the network into the messages they contain. Encapsulation comprises, inter alia, supplementing a message with a header, as known, which may include various service informations.

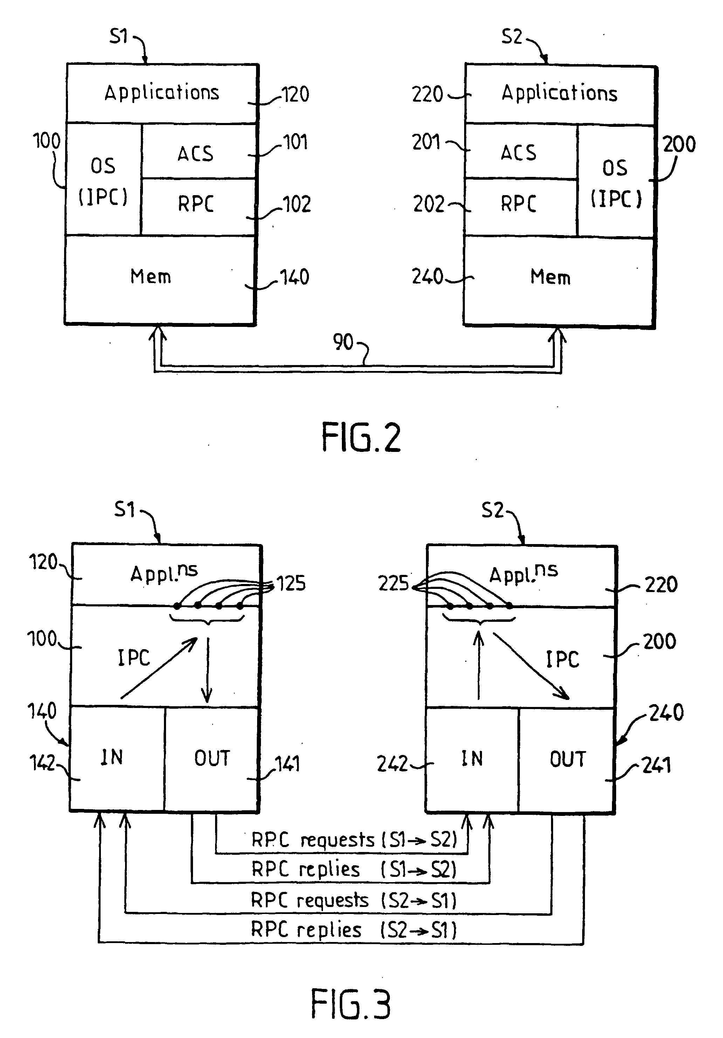

In fig. 2, each station includes an operating system. In addition to a kernel, the operating system includes an IPC service 100,200, with the RPC module 102, 202 and the ACS module 101, 201. Each station also supports application software 120,220, having processes or entities (hereinafter "applications"). Memory resources 140, 240 are devoted to communication. In a known fashion, the local OS 100, 200 is capable of allocating portions of these memory resources to processes or entities existing in the application software 120, 220, respectively, for their communication needs.

More detailed information on the existing operating systems may be found in the document entitled "Sun Embedded Workshop, Technical Overview", made available by SUN MICROELECTRONICS under ref No CS/TR-96-119.

It may occur that (i) a set of entities are waiting for memory resources in order to complete their respective tasks, and (ii) the exhausted (busy) memory resources are directly or indirectly owned by the same entities. This results into a memory deadlock situation, with the execution of the set of entities being globally blocked.

Practically, there are two types of memory deadlocks:
- distributed memory deadlocks which involve resources on multiple hosts, and
- local memory deadlocks which concern the local management of the network memory buffers allocated by the IPC Network Protocol in the name of sending applications.

It is also desirable to optimize memory usage by minimizing the amount of wasted network memory.

The notion of wasted network memory is considered in two dimensions:
- the "space" dimension, which is associated to the ratio between the amount of bytes contained in the messages and the amount of physical memory effectively allocated to store these messages, and
- the "time" dimension, which is associated to the delay during which network memory is allocated to messages which are not consumed.

In other words, whenever memory is used to store "big" messages which are consumed a "long" time after their receipt, most of that memory may be considered as wasted during that time.

The way this invention deals with the above problems will now be set forth.

Firstly, an example of distributed memory deadlock will be described with reference to Figs. 2 and 3. Client and server stress test applications have been run between two hosts S1, S2, to communicate through RPC's over prior art IPC protocols.

Generally, the applications have ports or end-points 125, 225 for the exchange of asynchronous messages. This is the asynchronous communication service (ACS), which allows applications to exchange asynchronous reliable messages through their respective end-points (also named "ports" hereinafter).

The RPC service or module works differently. At any time, a client application may send a request - a message of any size - to a server. The client application is blocked (in waiting state), until it receives a reply back from the server. The RPC service is fully reliable and guarantees that RPC requests and replies are delivered in an "at-most-one" fashion (e.g. that a given client request which was retransmitted over the network will not be delivered twice to the server, for instance). This RPC service is implemented by a dedicated RPC network protocol, where RPC requests and replies are identified and distinguished within specific message headers.

Such a RPC request originating in S1 is first processed by the local RPC module 102 of S1, which stores the RPC request. More precisely, RPC module 102 of S1 creates an object (in the sense of object programming), which identifies the RPC request and/or the emitting client application, and the server application, and blocks the emitting client application, until a RPC reply is received from the server, in correspondence with the object name of that object. Rules for definition of the object names may be used to distinguish between RPC requests, RPC replies and other messages.

After encapsulation, the RPC request is then sent to the distant server S2, which also stores it, awaiting to be processed. The destination distant server application has to prepare a RPC reply, which will have to travel back through the network to be received by the emitting client application. After that, the client application is unblocked.

Considering for example host S1, multiple client applications 120 have sent a RPC request (S1->S2) to server applications 220 located on the peer host S2, and are waiting for the RPC reply (S2->S1). In host S2, all the system memory 242 dedicated to incoming network messages has been allocated to store RPC requests from S1. These requests are queued behind server application end-points 225, from where they are consumed and processed one by one by server threads (in 220). Each server thread (in 220) is replying to the latest request it has consumed and processed, via memory 241. However, it is blocked waiting for network memory resources to become available on the peer site, at 142, for the receipt of the RPC reply (S2->S1).

The situation is the same, when considering RPC requests noted (S2->S1), from S2 to S1.

At this point, the set of client and servers are deadlocked because clients are waiting for replies from servers, which, in turn, are themselves blocked waiting for memory resources already allocated to pending RPC requests.

One object of this invention is to advance towards a solution to this problem.

One important concept to this effect is to distinguish between:
- "long-lived" messages which may be stored on the destination host for potentially unbounded delays, because they are not explicitly awaited by the application to which they are destined, and
- "temporary" messages which the IPC Network Protocol on the sending host knows in advance to be explicitly awaited by the application to which they are destined. Thus "temporary" here means "expected short storage".

Accordingly, each message is provided, e.g. in its header section, with a "temporary" flag indicating whether it qualifies as a "temporary" message, or not (thus being a "long-lived" message).

RPC requests sent by client applications are examples of "long-lived" messages. Messages sent in asynchronous mode among applications are also examples of "long-lived" messages. As done in standard reliable network protocols, the transmission of "long-lived" messages is submitted to a flow-control mechanism which prevents usual congestion problems.

By contrast, RPC replies sent by servers to clients are transmitted as "temporary" messages; this is because a RPC reply is by definition awaited by the client thread to which it is destined. To the extent RPC replies are already labelled as such, they may not need a special marking qualifying them as temporary messages.

In accordance with one feature of this invention, concerning memory management, the transmission for "temporary messages" uses dedicated memory pools on both the sending and the receiving sides.

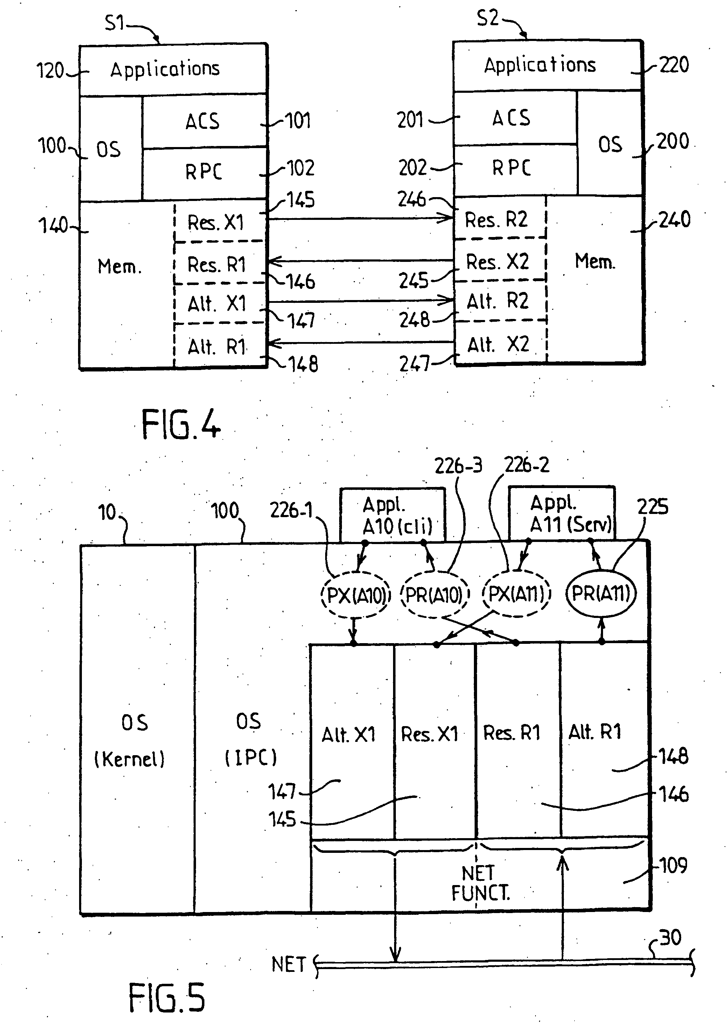

Accordingly (Fig. 4), host S1 reserves a minimum amount of memory 145 dedicated to the transmission of "temporary messages" (Res.X1) and a minimum amount of memory 146 dedicated to the receipt of "temporary messages" (Res.R1). Similarly, host S2 reserves a minimum amount of memory 245 dedicated to the transmission of "temporary messages" (Res.X2) and a minimum amount of memory 246 dedicated to the receipt of "temporary messages" (Res.R2). Thus, memory area 145 sends messages to 246, and, conversely, memory area 245 sends messages to 146.

Each local IPC module has an explicit peer-driven flow-control mechanism which exchanges service messages with the remote host(s). Thus, each remote or destination host will advertise a flow-control window to its source hosts, enabling the same to control the flow of messages its transmits.

The above described procedure avoids to submit "temporary messages" to an explicit peer-driven flow-control mechanism and, thus, speeds-up their throughput.

Messages which do not qualify as "temporary", i.e. "long-lived" messages, are exchanged between other memory portions (denoted "Alt"), which may be dynamically adjusted. For example (Fig. 4), "long-lived" messages may pass from 147 or Alt.X1 to 248 or Alt.R2, and, conversely, from 247 or Alt.X2 to 148 or Alt.R1. These non-marked messages may be processed in accordance with a known flow-control mechanism.

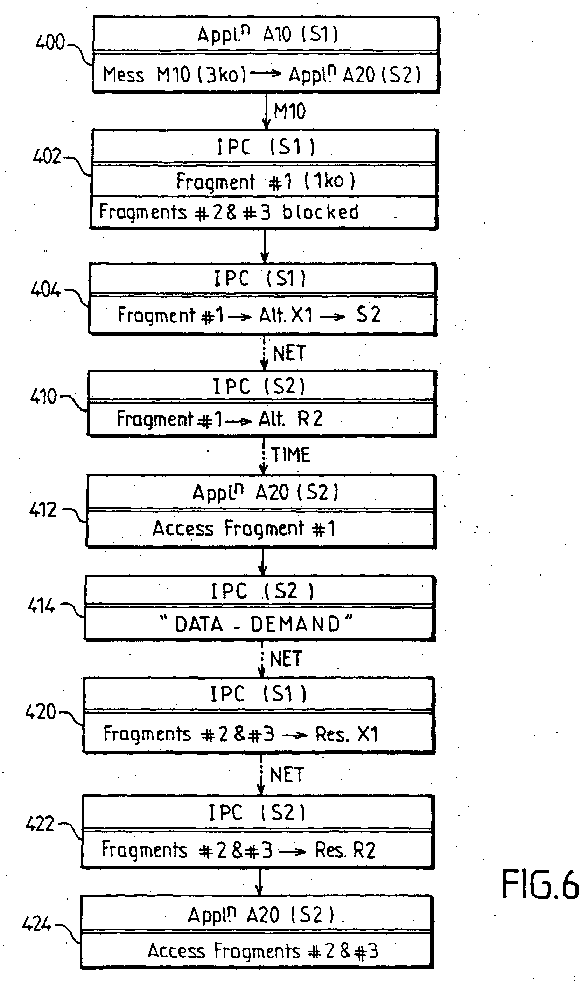

In more detail (Fig. 5) the OS of S1 comprises a kernel 10, and an IPC module 100. The OS has a memory allocator, enabling to define reserved portions of memory 145 and 146, as illustrated, and other portions of memory 147 and 148.

These portions of memory communicate with the network 90 via net functions 109, under control of the IPC OS module 100.

Figure 5 further shows a local client application A10 and a local server application A20, which have the ability to communicate with portions of memory 145 through 148, under control of the IPC OS module 100.

More specifically, when a RPC request is emitted by client application A10, this causes a transaction 226-1 or PX(A10), pursuant to which RPC(S1) stores the RPC request in memory area Alt.X1 or 147, and creates an object, as described.

Server application A11 has an ending-point or port 225 or PR(A11), at which a plurality of such RPC requests are queuing, from memory area Alt.R1 or 148.

When server application A11 issues a RPC reply, this causes a transaction 226-2 or PX(A11), pursuant to which the RPC reply is stored as a temporary message in memory area Res.X1 or 145.

After transmission through the network, such a RPC reply arriving in S1 will be stored as a temporary message in memory area Res.R1 or 146. Then, via a transaction 226-3 or PR(A10), RPC(S1) delivers the RPC reply to application A10 which is blocked awaiting it. Assuming the RPC reply is complete, application A10 is unblocked and the RPC request object is destroyed.

Normally, the RPC reply message will be immediately accessed by the application thread which is waiting for it. The corresponding memory area in 146 or 246 is thus rapidly freed.

It may happen that a particular RPC reply comes e.g. in 146, while the client thread in 120 is no longer waiting for that. RPC reply. If so, the RPC reply is immediately dropped upon its receipt in 146, thus freeing memory area for other temporary messages.

In any case, the receipt of a RPC reply message, e.g. in 146, may be positively acknowledged to the sending host S2, allowing the sending host to free the memory resources in 245 which contain the copy of the RPC reply message (which is kept in memory to retransmit the message in case it was lost over the network, for instance). Memory area is thus freed in 245.

One situation remains to be considered: It may also happen that no memory is available e.g. in 146 to store a temporary message upon its receipt. This means that the full amount of reserved memory in 146 is "temporarily" allocated to previously received temporary messages, for which the applications which await them have not yet been able (i.e. re-scheduled by the OS) to consume them and to free the corresponding memory locations. But this is only a transient exhaustion situation which imposes to drop the temporary message and to have it be retransmitted, as if it had been lost over the network.

It has been indicated that minimum amounts of memory are reserved to define reserved memory areas Res.X1 and Res.R1. These amounts of memory may be dynamically adjusted, above the minimum, if available memory permits. The minimum amounts may also be different for transmission and reception, in particular higher for transmission. Another alternative would be to use the same memory area for Res.X1 and Res.R1., and to share it between transmission and reception according to a given scheme (e.g. counting transmissions and receptions).

Basically, a method of transmitting messages between computer stations, comprises the steps of:
a) storing a message to be transmitted in a first computer station,
b) sending the message to be transmitted from the first computer station to a second computer station,
c) storing the message received in the second computer station,
d) subsequently removing the message from memory in the first computer station, and in the second computer station, subject to message use criteria.

In accordance with the first feature of this invention, step a) comprises storing the message to be transmitted in a first reserved memory portion or in another memory portion of the first computer station, depending upon whether the message satisfies a short-storage condition, or not, and
step c) comprises storing the received message in a second reserved memory portion or in another memory portion of the second computer station, depending upon whether the received message satisfies the short-storage condition, or not.

The above describes how the concept of "temporary message" allows the RPC, or, more broadly, the IPC, to address the distributed memory deadlock issue. Generally, the IPC or RPC is arranged for acknowledging receipt of messages having the selected mark qualifying them as temporary. Conversely, upon receipt of such acknowledgments for messages it has sent, the IPC will free the corresponding memory locations in the local first memory portion.

In accordance with another development of this invention, the concept of "temporary message" may also be used to address the time-dimension of the memory wasting issue, as described above.

Basically, the time-dimension memory wasting problem concerns large "long-lived" messages. Such messages might be kept in the system memory of their destination host for a long time before being consumed.

While other approaches may be contemplated, a message may be considered as "large" if it exceeds a given proportion of the available flow-control window, as advertised by the destination host to the source host, in accordance with the above mentioned explicit peer-driven flow-control mechanism. Typically, the given proportion is about half the flow-control window.

The way this problem is solved will now be described in a simplified example (in terms of octets or Bytes), with reference to Fig. 6.

At step 400, an application A10 on host S1 wishes to transmit a message M10 of 3 Ko (3 kilooctets, or kiloBytes) to application A20 in remote host S2.

At step 402, in source host S1, the IPC Network Protocol IPC(S1) decides to fragment message M10 into three fragments of 1 kO each. Then, it builds fragment # 1 from a small part of the large "long-lived" message M10 sent by application A10. At step 404, IPC(S1) provides fragment #1 with the labels "truncated message" and "NOT temporary" (long lived), and a fragment rank identification, together with indications concerning the source and destination applications. This can be inserted in the fragment heading. Then IPC(S1) puts fragment #1 in memory area 147 or Alt.X1 for transmission as a long-lived message to the destination host.

The remaining part of message M10 may either be blocked by the IPC(S1) to remain in the sending application A10, or be stored in the system memory of the source host S1.

At step 410, the "truncated" long-lived message (fragment #1) then reaches the memory of the destination host S2. Here, IPC Network Protocol IPC(S2) places it in memory area 248 or Alt.R2, which serves for reception of long-lived messages.

At step 412, after some time, the application A20(S2) to which the message is destined accesses and effectively consumes this "truncated" long-lived message, i.e. fragment #1 of M10. Besides, the IPC Network Protocol IPC(S2) on the receiving side has detected whether the message as received (fragment #1) does not hold all the data to be transmitted by the sending application A10(S1) on the source host S1.

In such a case, at step 414, IPC(S2) sends to source host S1 a "data-demand" control message to obtain the remaining part of the truncated "long-lived" message M10 (fragments #2 and #3 in the example). The data demand includes an appropriate identification of the sending application it concerns.

At step 420, upon receipt of the data demand in the source host S1, IPC(S1) will now transmit the remaining part of the "long-lived" message M10 (or at least a part of it) as a "temporary" message. Fragments #2 and #3 are obtained from application A10 (or recovered in system memory); they are labelled as "temporary", and are put in the memory area 145 or Res.X1 of S1, which is reserved for temporary messages.

It is important to understand the reason why fragments #2 and #3 may qualify as temporary when sent. This is because source host S1 is guaranteed at this stage that the remaining part of the initial "long-lived" message M10 is now explicitly awaited by application A20 on destination host S2.

At step 422, these fragments #2 and #3 are received in memory area 246 or Res.R2 of S2, to be rapidly accessed by application A20 at step 424. This is consistent with the need for memory areas 145 and 246 to be rapidly freed. As before, IPC(S2) may acknowledge receipt of fragments #2 and #3 in memory area 246, thus enabling IPC(S1) to free the corresponding locations in memory area 145.

Despite the rest of the message has been described as fragments of 1 kO, it may also be transmitted in integral form.

For comparison, the TCP protocol has a default transmission window of 4 kilooctets. Here, the transmission of information in "message mode", identified as such, works differently from TCP. However, a size of 4 kilooctets may also be used.

As a whole, the concept of "temporary message" and the memory resources which are dedicated to their exchange can be viewed as a set of wagons which circulate among communicating hosts to carry "temporary" loads through a non-stop producer-consumer model.

Another aspect of the size of messages will now be dealt with.

Known network protocols such as Internet Protocol (IP) fragment messages which are bigger than the maximum size of the underlying network data-link.

On the receive side, the IP protocol provides that a fragmented message is delivered to the user entity only after it has been fully reassembled, i.e. after all its fragments have been received. This principle has two main drawbacks:
- it wastes network memory with pending received message fragments which cannot be consumed. This is one of the main memory congestion issues with IP.
- it dramatically penalizes the transmission throughput of fragmented messages from application to application.

The IPC Network Protocol performs such a fragmentation, preferably for "long-lived" messages, only. This is because "temporary" messages are expected in the receive side, and therefore will not stay in memory for a long time.

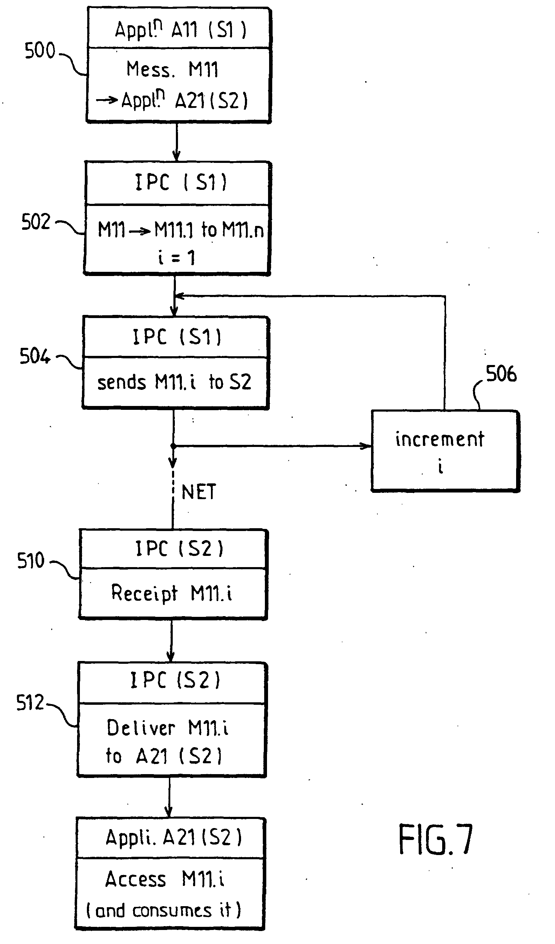

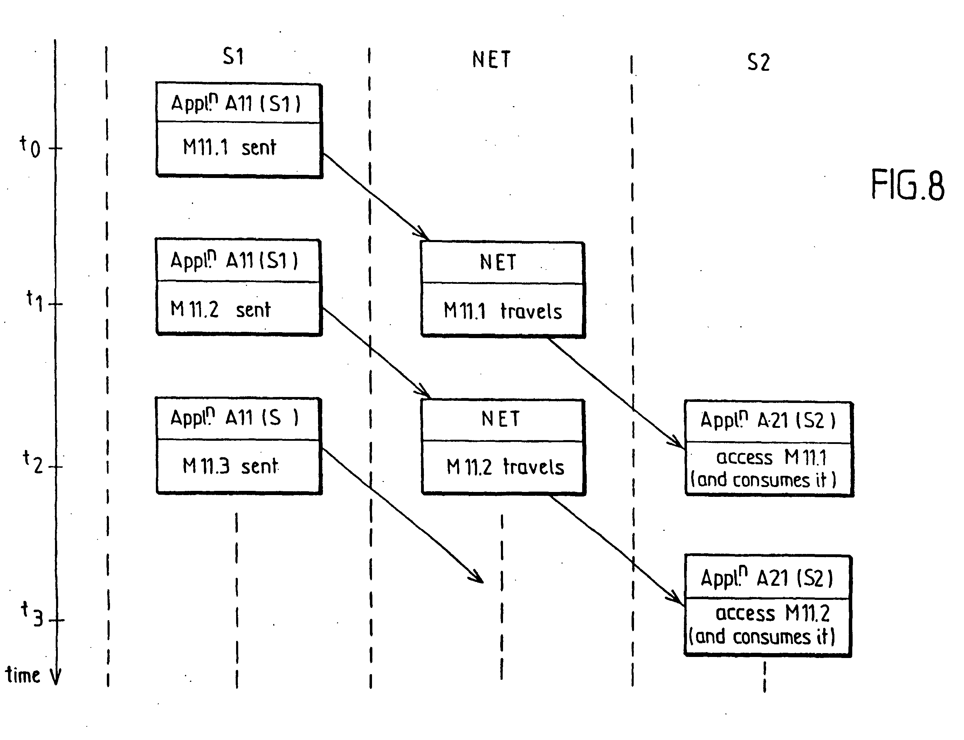

To address these issues, the IPC Network Protocol transmit long-lived fragmented messages as it will now be described with reference to Fig. 7. The description of figure 7 is sequential, for purposes of explanation only, since, as it will be shown in figure 8, the operation is parallel.

The starting point is the fact that a large message M11 is emitted by application A11 of station S1, at step 500.

As noted in step 502, the IPC of S1 has a rule to split message M11 into fragments M11.1 through M11.n. Index i denotes a current fragment, with i = 1 initially.
a) in S1, IPC(S1) builds a first fragment M11.1 of M11 (or M11.i, with i = 1), and transmits it to destination station S2, at step 504. Each fragment is labelled as a fragment, and also has a fragment identification.
   The IPC Network Protocol of S1 provides for step a) to be selectively repeated with the successive fragments.
b) at step 510, IPC(S2) receives the current fragment M11.i. At step 512, it delivers it to the application A21(S2) to which it is destined, if any. Thus, fragment M11.i can be immediately consumed by A21(S2).
c) then, application A21(S2) consumes the current fragment M11.i at step 514.

Thus, IPC(S1) on the sending side builds and transmits each fragment one by one, allowing each individual packet to be transmitted to S2, and then delivered and acknowledged independently by IPC(S2). More precisely, IPC(S2) successively delivers in a transparent way the different fragments of the message as they are received from the network.

In other words, the IPC Network Protocol allows an application to "eat" message fragments upon their receipt, rather than keeping them in network memory until having reassembled the whole message.

In fact, seen from the destination side, the following operations are performed in parallel, as visible at time t2 in fig. 8:
- the destination application A21(S2) consumes the data contained within the first fragment M11.1 received from the network,
- the second fragment M11.2 is being carried over the network,
- the third fragment M11.3 is set up for transmission on the source host by the sending application A11(S1).

Globally, this model allows to effectively perform the transmission and the receipt of a fragmented message in a real parallelism from application to application.

The above second feature of the invention may be defined as a method of transmitting a message between computer stations, comprising the steps of:
a) in a first computer station, receiving from a local source application a request for transmission of a message to a destination application in a second computer station,
b) deciding to transmit the message in fragmented or integral form, depending upon satisfaction of a selected condition by the message, and, in case of fragmented transmission,
c) transmitting successive message fragments to the second computer station,
d) in the second computer station, transferring each received message fragment to the local destination application.

Allowing each fragment to be immediately consumed upon its receipt allows the corresponding memory resources to be freed more quickly and to be used for the receipt of the next fragments of the same message.

Along with improving performances, this model potentially allows the receipt of a fragmented message with available memory resources smaller than the unfragmented message size.

Although other ways of identifying fragments may be contemplated, it is deemed preferable that each message fragment is specifically labelled as "fragmented", and individually identified. This is done by the Inter Process Communication module, which is arranged for cooperating with the message processing functions to introduce appropriate corresponding information in the header of the message fragments.

Generally, the fragmentation is decided on the basis of a selected condition, which may be based on the message size, and/or related to an estimated time of presence of the message in the memory of the remote computer station, before delivery. Preferably, the size of the fragments is selected small enough to optimize both fragment transmission and memory occupation.

Local memory deadlocks will now be considered.

When the IPC Network Protocol has to transmit a message being sent by an application, it may need to allocate multiple buffers to this effect.

If the required number of buffers is not immediately available, the application should wait until it can be given the required number of buffers.

When it happens that numerous applications have large messages to send, it is very likely that each of them will be allocated less buffers than it needs. This can lead to a situation where all these applications are waiting for available memory buffers which are owned by others, resulting into a local memory deadlock.

With a view to minimize this problem, the IPC Network Protocol as proposed here allocates output message buffers as will now be described.

The allocator of output messages uses memory buffer units of the same "small" size, to simplify the allocation and to address the "space-dimension" memory wasting issue described above. It should be kept in mind here that the memory allocator also needs memory for its own processing purposes. Thus, the simpler it is, the smallest amount of memory it needs, with more memory being available as memory 140 dedicated to communications.

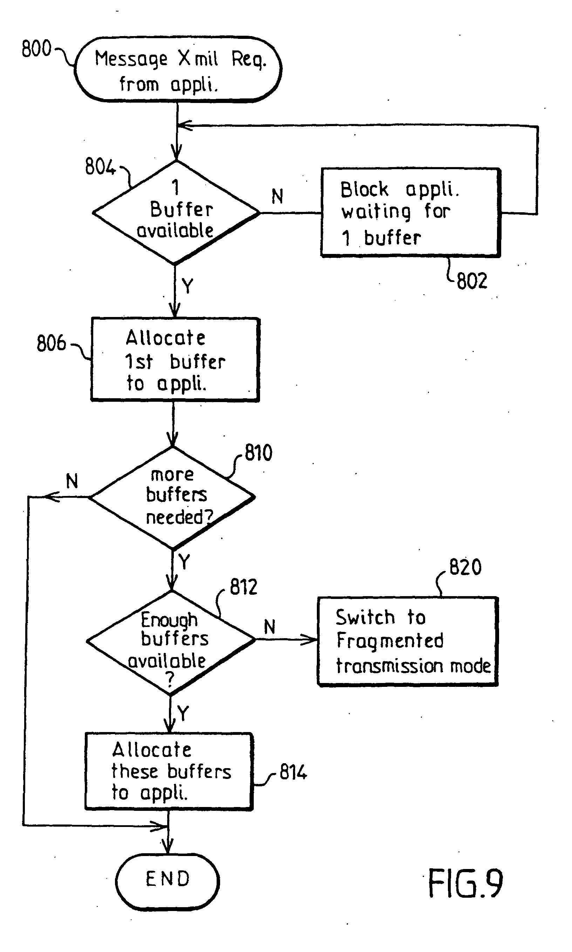

With reference to Fig. 9, at 800, a request for transmission of a message originates from a given application.

Step 804 then tests whether a first memory buffer is available. If not, step 802 consists in blocking the application, waiting for a first memory buffer. If a first buffer is available, step 806 allocates that buffer to the requesting application.

This is the end where a single buffer is needed (810, output N), or if the requesting application is satisfied with a single allocated buffer, despite it had a larger request.

When more buffers are needed (810, output Y), the IPC protocol determines at 812 whether all required buffers are available. If so, step 814 allocates these buffers to the application, and this is the end.

Otherwise, at step 820, the IPC switches to the fragmented message transmission mode, as described hereinbefore with reference to Figs. 6 and 7. Preferably, the fragmented mode of transmission of the rest of the message uses the already allocated first buffer unit.

This third feature defines a method of transmitting a message from a computer station, comprising the steps of:
a) upon receipt of a request for transmission of a message from a local application, asking for allocation of a first buffer unit for that message, while blocking the requesting local application in waiting state pending such allocation,
b) upon effective allocation of the first buffer unit, putting therein at least a portion of the message,
c) if only a portion of the message may be contained in the first buffer unit,
   c1) asking from the memory management functions for allocation of enough further buffer units to contain the rest of the message,
   c2) upon rapid effective allocation of the further buffer units, using these for transmission of the rest of the message,
   c3) otherwise, switching to a fragmented mode of transmission of the rest of the message.

In short:
- when a single buffer is needed to transmit a message (or a part of a message), the memory allocator can block the sending application, waiting for a buffer to become available.
- when more than a single buffer is needed to transmit a message (or a part of a message), the sending application is only allocated the first buffer in "blocking mode". Then, the IPC tries to allocate the remaining buffers immediately. If it cannot allocate all of them, only the first buffer is kept and the message is automatically transmitted through the "fragmentation" protocol, even if its whole size does not exceed the maximum frame size of the underlying network transmission protocol.

This principle guarantees that no buffer is owned by an application which waits for a buffer to become available, and thus avoids local memory deadlocks to occur.

Furthermore, in conjunction with the fragmentation protocol described above, it also allows the transmission of a (possibly fragmented) message with available memory resources lower than its size.

The above described three main features of the invention are of special interest when used together. However, they may also be used independently.

The invention may have numerous applications. In this regard, the terminology used in the above description should not be construed restrictively. This remarks specifically applies to expressions like "Inter Process Communication module", "remote procedure call module", and the accompanying terminology. It also applies to notions like "marking a message". The expression "Remote computer station" is also general, and does not imply any limitation as to the type of the station, which may not be a conventional PC-type computer, nor as to the physical distance between the stations, which may be mobile.

The scope of the invention also extends to those parts of a communication-oriented operating system which include significant portions of the inventive features.

## Claims

1. A communication-oriented operating system for a computer station (S1), said operating system having memory management functions (10M), message processing functions (100P), and an Inter Process Communication module (100) adapted to handle exchange of messages between local applications (120) on said computer station (S1) and distant applications (220) on a remote computer station (S2), in cooperation with said message processing functions (100P) and said memory management functions (10M), said message processing functions (100P) being capable of processing a service portion of messages to and from said computer station,
wherein said Inter Process Communication module (100) is arranged for cooperating with said memory management functions (10M) to reserve a first portion of memory (145) and a second portion of memory (146), and
said Inter Process Communication module (100) is arranged for cooperating with said memory management functions (10M) and said message processing functions (100P), in accordance with a short storage condition, to put selected ones of the messages to be transmitted in said first portion of memory (145), and to put selected ones of the messages received in said second portion of memory (146).

2. A system according to claim 1, wherein said short storage condition is represented by a mark, in at least certain ones of said selected messages.

3. A system according to claim 1 or 2, wherein said Inter Process Communication module (100) is arranged for freeing the memory locations corresponding to a message in the local first memory portion (145), upon issuance of a receipt acknowledgment for that message from the remote computer station.

4. A system according to claim 1, 2 or 3, wherein said Inter Process Communication module (100) is arranged for processing the non-selected ones of the messages in accordance with a flow-control mechanism.

5. A system according to any of claims 1 through 4, wherein said Inter Process Communication module (100) comprises a remote procedure call module, adapted to handle exchange of request messages and reply messages between local applications (120) on said computer station (S1) and distant applications (220) on a remote computer station (S2), and said selected ones of the messages comprise the reply messages of the remote procedure call module.

6. A system according to any of claims 1 through 5, wherein said Inter Process Communication module (100) is arranged for fragmenting messages emitted by local applications (120) and exceeding a selected size into a first and a second message portions, for transmitting the first portion of such a message as a non-selected message to a remote host computer station (S2), and for responding to a further data demand from said remote host computer station by transmitting the second portion as a selected message to said remote host computer station (S2).

7. A system according to any of claims 1 through 6, wherein said Inter Process Communication module (100) is arranged for requesting memory allocation from said memory management functions (10M) by units, related to a network message size, wherein said Inter Process Communication module (100) is capable of fragmenting messages to be sent satisfying a selected condition into a plurality of message fragments, and of transmitting the message fragments one by one to said remote computer station, and
said Inter Process Communication module (100) is capable, upon receipt of successive message fragments, of delivering them one by one to the destination application.

8. A system according to claim 7, wherein said selected condition includes a condition related to the message size.

9. A system according to claim 7, wherein said selected condition includes a condition related to an estimated time of presence of the message in the memory of the remote computer station (S2), before delivery.

10. A system according to any of claims 7 through 9, wherein said message processing functions (100P) are capable of processing a service portion of messages to and from said computer station, and said Inter Process Communication module (100) is arranged for cooperating with said message processing functions (100P) to introduce a fragment-indicating mark in the message fragments.

11. A system according to any of claims 1 through 10, in which said memory management functions (10M) allocate memory by buffer units,
wherein said Inter Process Communication module (100) is arranged to respond to an application presenting a message transmission request by:
- asking for allocation of a first buffer unit from said memory management functions, while blocking that application in waiting state pending such allocation,
- upon effective allocation of said first buffer unit, putting therein at least a portion of said message,
- if only a portion of the message may be contained in said first buffer unit,
* asking from said memory management functions for allocation of enough further buffer units to contain the rest of the message,
* upon rapid effective allocation of said further buffer units, using these for transmission of the rest of the message,
* otherwise, switching to a fragmented mode of transmission of the rest of the message.

12. A system according to claim 11, wherein said fragmented mode of transmission of the rest of the message uses said allocated first buffer unit.

13. A method of transmitting messages between computer stations, comprising the steps of:
a) storing a message to be transmitted in a first computer station (S1),
b) sending the message to be transmitted from the first computer station (S1) to a second computer station (S2),
c) storing the message received in the second computer station (S2),
d) subsequently removing the message from memory in said first computer station (S1), and in said second computer station (S2), subject to message use criteria,
wherein
step a) comprises storing said message to be transmitted in a first reserved memory portion (145) or in another memory portion (147) of said first computer station (S1), depending upon whether the message satisfies a short-storage condition, or not, and
step c) comprises storing said received message in a second reserved memory portion (246) or in another memory portion (248) of said second computer station (S2), depending upon whether said received message satisfies said short-storage condition, or not.

14. A method according to claim 13, wherein step a) comprises marking the message, when satisfying said short-storage condition.

15. A method according to claim 13 or 14, wherein step d) comprises:
d1) sending a message receipt acknowledgment from the second station (S2) to the first station (S1), and
d2) removing the message from storage in said first computer station (S1) upon receipt of such message receipt acknowledgment.

16. A method according to claim 15, wherein step d) further comprises:
d3) removing the message from storage in said second computer station (S2) after access thereto in the second computer station.

17. A method according to claim 13, wherein said short-storage condition of steps a) and c) is selected to include at least one of the categories of messages comprising replies to request messages and rests of fragmented messages upon demand therefor.

18. A method according to any of claims 13 through 17, wherein :
- step (a) comprises:
. (aa1) in the first computer station, receiving from a local source application a request for transmission of a message to a destination application in a second computer station,
. (aa2) deciding to transmit the message in fragmented or integral form, depending upon satisfaction of a selected condition by the message, and, in case of fragmented transmission,
- step (b) comprises:
. (ba1) transmitting successive message fragments to said second computer station,
- step (c) comprises
. (ca1) in the second computer station, transferring each received message fragment to the local destination application.

19. A method according to any of claims 13 through 18, wherein :
- step (a) comprises :
. (ab1) upon receipt of a request for transmission of a message from a local application, asking for allocation of a first buffer unit for that message, while blocking the requesting local application in waiting state pending such allocation,
- (ab2) upon effective allocation of said first buffer unit, putting therein at least a portion of said message,
- (ab3) if only a portion of the message may be contained in said first buffer unit,
(ab31) asking from said memory management functions for allocation of enough further buffer units to contain the rest of the message,
(ab32) upon rapid effective allocation of said further buffer units, using these for transmission of the rest of the message,
(ab33) otherwise, switching to a fragmented mode of transmission of the rest of the message.

20. A method according to claim 19, wherein, at step (ab33) said fragmented mode of transmission of the rest of the message uses said first buffer unit allocated at step (ab2).

## Patentansprüche

1. Kommunikationsorientiertes Betriebssystem für eine Computerstation (S1), das Speichermanagementfunktionen (10M), Nachrichtenverarbeitungsfunktionen (100P) und ein Interprozeß-Kommunikationsmodul (100) aufweist, wobei das Modul (100) eingerichtet ist, den Nachrichtenaustausch zwischen lokalen Anwendungen (120) in der Computerstation (S1) und entfernten Anwendungen (220) in einer entfernten Computerstation (S2) in Kooperation mit den Nachrichtenverarbeitungsfunktionen (100P) und den Speichermanagementfunktionen (10M) abzuwickeln, wobei die Nachrichtenverarbeitungsfunktionen (100P) fähig ist, einen Dienstabschnitt der Nachrichten zu und von der Computerstation zu verarbeiten,
wobei das Interprozeß-Kommunikationsmodul (100) so beschaffen ist, daß es mit den Speichermanagementfunktionen (10M) kooperiert, um einen ersten Speicherabschnitt (145) und einen zweiten Speicherabschnitt (146) zu reservieren, und
das Interprozeß-Kommunikationsmodul (100) so beschaffen ist, daß es mit den Speichermanagementfunktionen (10M) und den Nachrichtenverarbeitungsfunktionen (100P) in Übereinstimmung mit einer Kurzspeicherbedingung kooperiert, um ausgewählte der zu sendenden Nachrichten in dem ersten Speicherbereich (145) abzulegen und um ausgewählte der empfangenen Nachrichten in dem zweiten Speicherbereich (146) abzulegen.

2. System nach Anspruch 1, bei dem die Kurzspeicherbedingung durch eine Markierung wenigstens in bestimmten der ausgewählten Nachrichten repräsentiert wird.

3. System nach Anspruch 1 oder 2, bei dem das Interprozeß-Kommunikationsmodul (100) so beschaffen ist, daß es die Speicherplätze, die einer Nachricht in dem lokalen ersten Speicherabschnitt (145) entsprechen, dann, wenn die entfernte Computerstation eine Empfangsquittierung für diese Nachricht ausgibt, freigibt.

4. System nach Anspruch 1, 2 oder 3, bei dem das Interprozeß-Kommunikationsmodul (100) so beschaffen ist, daß es nicht gewählte der Nachrichten in Übereinstimmung mit einem Flußsteuermechanismus verarbeitet.

5. System nach einem der Ansprüche 1 bis 4, bei dem das Interprozeß-Kommunikationsmodul (100) ein Fernprozeduraufruf-Modul umfaßt, das eingerichtet ist, den Austausch von Anforderungsnachrichten und von Antwortnachrichten zwischen lokalen Anwendungen (120) in der Computerstation (S1) und entfernten Anwendungen (220) in einer entfernten Computerstation (S2) abzuwikkeln, und die ausgewählten der Nachrichten die Antwortnachrichten des Fernprozeduraufruf-Moduls umfassen.

6. System nach einem der Ansprüche 1 bis 5, bei dem das Interprozeß-Kommunikationsmodul (100) so beschaffen ist, daß es von lokalen Anwendungen (120) ausgesendete und eine gewählte Größe übersteigende Nachrichten in einen ersten und einen zweiten Nachrichtenabschnitt fragmentiert, um den ersten Abschnitt einer solchen Nachricht als eine nicht ausgewählte Nachricht an eine entfernte Host-Computerstation (S2) zu senden und um auf eine weitere Datenanforderung von der entfernten Host-Computerstation durch Senden des zweiten Abschnitts als einer ausgewählten Nachricht an die entfernte Host-Computerstation (S2) zu antworten.

7. System nach einem der Ansprüche 1 bis 6, bei dem das Interprozeß-Kommunikationsmodul (100) so beschaffen ist, daß es eine Speicherzuweisung von den Speichermanagementfunktionen (10M) in Einheiten, die auf eine Netznachrichtengröße bezogen sind, anfordert, wobei das Interprozeß-Kommunikationsmodul (100) fähig ist, zu sendende Nachrichten, die eine ausgewählte Bedingung erfüllen, in mehrere Nachrichtenfragmente zu fragmentieren und die Nachrichtenfragmente nacheinander an die entfernte Computerstation zu senden, und
das Interprozeß-Kommunikationsmodul (100) fähig ist, bei Empfang aufeinanderfolgender Nachrichtenfragmente diese einzeln an die Zielanwendung zu liefern.

8. System nach Anspruch 7, bei dem die ausgewählte Bedingung eine mit der Nachrichtengröße in Beziehung stehende Bedingung enthält.

9. System nach Anspruch 7, bei der die ausgewählte Bedingung eine mit einer geschätzten Aufenthaltszeit der Nachricht im Speicher der entfernten Computerstation (S2) vor der Lieferung in Beziehung stehende Bedingung enthält.

10. System nach einem der Ansprüche 7 bis 9, bei dem die Nachrichtenverarbeitungsfunktionen (100P) fähig sind, einen Dienstabschnitt von Nachrichten zu und von der Computerstation zu verarbeiten und das Interprozeß-Kommunikationsmodul (100) so beschaffen ist, daß es mit den Nachrichtenverarbeitungsfunktionen (100P) kooperiert, um in den Nachrichtenfragmenten eine Fragmentangabemarkierung einzuführen.

11. System nach einem der Ansprüche 1 bis 10, bei dem die Speichermanagementfunktionen (10M) Speicherraum in Puffereinheiten zuweisen,
wobei das Interprozeß-Kommunikationsmodul (100) so beschaffen ist, daß es auf eine Anwendung antwortet, die eine Nachrichtenübertragungsanforderung aufweist, indem es:
- eine Zuweisung einer ersten Puffereinheit von den Speichermanagementfunktionen verlangt und dabei diese Anwendung während einer solchen Zuweisung im Wartezustand blockiert,
- bei einer effektiven Zuweisung der ersten Puffereinheit darin wenigstens einen Abschnitt der Nachricht ablegt,
- falls nur ein Teil der Nachricht in die erste Puffereinheit paßt,
* von den Speichermanagementfunktionen die Zuweisung von genügend weiteren Puffereinheiten verlangt, um die restliche Nachricht aufzunehmen.
* bei schneller effektiver Zuweisung der weiteren Puffereinheiten diese für die Übertragung der restlichen Nachricht verwendet,
* andernfalls zu einer fragmentierten Übertragungsbetriebsart für die restliche Nachricht umschaltet.

12. System nach Anspruch 11, bei dem die fragmentierte Übertragungsbetriebsart für die restliche Nachricht die zugewiesene erste Puffereinheit verwendet.

13. Verfahren zum Übertragen von Nachrichten zwischen Computerstationen, das die folgenden Schritte umfaßt:
a) Speichern einer zu übertragenden Nachricht in einer ersten Computerstation (S1),
b) Senden der zu übertragenden Nachricht von der ersten Computerstation (S1) zu einer zweiten Computerstation (S2),
c) Speichern der empfangenen Nachricht in der zweiten Computerstation (S2),
d) anschließend Entfernen der Nachricht aus dem Speicher in der ersten Computerstation (S1) und in der zweiten Computerstation (S2) abhängig von Nachrichtenverwendungskriterien,
wobei
der Schritt a) das Speichern der zu übertragenden Nachricht in einem ersten reservierten Speicherabschnitt (145) oder in einem weiteren Speicherabschnitt (147) der ersten Computerstation (S1) in Abhängigkeit davon, ob die Nachricht eine Kurzspeicherbedingung erfüllt oder nicht, umfaßt und
der Schritt c) das Speichern der empfangenen Nachricht in einem zweiten reservierten Speicherabschnitt (246) oder in einem weiteren Speicherabschnitt (248) der zweiten Computerstation (S2) in Abhängigkeit davon, ob die empfangene Nachricht die Kurzspeicherbedingung erfüllt oder nicht, umfaßt.

14. Verfahren nach Anspruch 13, bei dem der Schritt a) das Markieren der Nachricht dann, wenn sie die Kurzspeicherbedingung erfüllt, umfaßt.

15. Verfahren nach Anspruch 13 oder 14, bei dem der Schritt d) umfaßt:
d1) Senden einer Nachrichtenempfangsquittierung von der zweiten Station (S2) zu der ersten Station (S1) und
d2) Entfernen der Nachricht aus dem Speicher in der ersten Computerstation (S1) bei Empfang einer solchen Nachrichtenempfangsquittierung.

16. Verfahren nach Anspruch 15, bei dem der Schritt d) ferner umfaßt:
d3) Entfernen der Nachricht aus dem Speicher in der zweiten Computerstation (S2), nachdem die zweite Computerstation darauf zugegriffen hat.

17. Verfahren nach Anspruch 13, bei dem die Kurzspeicherbedingung der Schritte a) und c) so ausgewählt wird, daß sie wenigstens eine der Nachrichtenkategorien enthält, die Antworten auf Anforderungsnachrichten und Reste fragmentierter Nachrichten bei einer Nachfrage nach ihnen umfassen.

18. Verfahren nach einem der Ansprüche 13 bis 17, bei dem:
- der Schritt (a) umfaßt:
(aa1) in der ersten Computerstation Empfangen einer Anforderung für eine Übertragung einer Nachricht an eine Zielanwendung in einer zweiten Computerstation von einer lokalen Quellanwendung,
(aa2) Entscheiden, ob die Nachricht in fragmentierter oder integraler Form übertragen werden soll, in Abhängigkeit von der Erfüllung einer ausgewählten Bedingung durch die Nachricht und bei dem im Fall der fragmentierten Übertragung
- der Schritt (b) umfaßt:
(ba1) Übertragen aufeinanderfolgender Nachrichtenfragemente an die zweite Computerstation,
- der Schritt (c) umfaßt:
(ca1) in der zweiten Computerstation Übertragen jedes empfangenen Nachrichtenfragments an die lokale Zielanwendung.

19. Verfahren nach einem der Ansprüche 13 bis 18, bei dem:
- der Schritt (a) umfaßt:
(ab1) bei Empfang einer Anforderung einer Übertragung einer Nachricht von einer lokalen Anwendung Verlangen einer Zuweisung einer ersten Puffereinheit für diese Nachricht, während die anfordernde lokale Anwendung während einer solchen Zuweisung in einem Wartezustand blockiert wird,
(ab2) bei effektiver Zuweisung der ersten Puffereinheit Ablegen wenigstens eines Abschnitts der Nachricht darin,
(ab3) falls nur ein Abschnitt der ersten Nachricht in die erste Puffereinheit paßt,
(ab31) Verlangen einer Zuweisung von genügend weiteren Puffereinheiten von den Speichermanagementfunktionen, um den Rest der Nachricht aufzunehmen,
(ab32) bei einer schnellen effektiven Zuweisung der weiteren Puffereinheiten Verwenden dieser Einheiten für die Übertragung der restlichen Nachricht,
(ab33) andernfalls Umschalten zu einer fragmentierten Übertragungsbetriebsart für die restliche Nachricht.

20. Verfahren nach Anspruch 19, bei dem im Schritt (ab33) die fragmentierte Übertragungsbetriebsart für den Rest der Nachricht die erste Puffereinheit, die im Schritt (ab2) zugewiesen wird, verwendet.

## Revendications

1. Système d'exploitation orienté communication pour une station d'ordinateur (S1), ledit système d'exploitation comportant des fonctions de gestion de mémoire (10M), des fonctions de traitement de message (100P) et un module de communication interprocessus (100) adapté pour gérer l'échange de messages entre des applications locales (120) sur ladite station d'ordinateur (S1) et des applications distantes (220) sur une station d'ordinateur à distance (S2), en coopération avec lesdites fonctions de traitement de message (100P) et lesdites fonctions de gestion de mémoire (10M), lesdites fonctions de traitement de message (100P) étant capables de traiter une partie de service de messages vers et en provenance de ladite station d'ordinateur,
dans lequel ledit module de communication interprocessus (100) est agencé pour coopérer avec lesdites fonctions de gestion de mémoire (10M) afin de réserver une première partie de mémoire (145) et une deuxième partie de mémoire (146), et
ledit module de communication interprocessus (100) est agencé pour coopérer avec lesdites fonctions de gestion de mémoire (10M) et lesdites fonctions de traitement de message (100P), conformément à une condition de mémorisation courte, afin de placer des messages sélectionnés parmi les messages à transmettre dans ladite première partie de mémoire (145) et afin de placer des messages sélectionnés parmi les messages reçus dans ladite deuxième partie de mémoire (146).

2. Système selon la revendication 1, dans lequel ladite condition de mémorisation courte est représentée par une marque, dans au moins certains messages parmi lesdits messages sélectionnés.

3. Système selon la revendication 1 ou 2, dans lequel ledit module de communication interprocessus (100) est agencé pour libérer les emplacements de mémoire correspondant à un message dans la première partie de mémoire locale (145), lors de l'envoi d'un accusé de réception pour ce message par la station d'ordinateur à distance.

4. Système selon la revendication 1, 2 ou 3, dans lequel ledit module de communication interprocessus (100) est agencé pour traiter les messages non sélectionnés parmi les messages conformément à un mécanisme de contrôle de flux.

5. Système selon l'une quelconque des revendications 1 à 4, dans lequel ledit module de communication interprocessus (100) comprend un module d'appel de procédure à distance, adapté pour gérer l'échange de messages de requête et de messages de réponse entre des applications locales (120) sur ladite station d'ordinateur (S1) et des applications distantes (220) sur une station d'ordinateur à distance (S2), et lesdits messages sélectionnés parmi les messages comprennent les messages de réponse du module d'appel de procédure à distance.

6. Système selon l'une quelconque des revendications 1 à 5, dans lequel ledit module de communication interprocessus (100) est agencé pour fragmenter des messages émis par des applications locales (120) et dépassant une taille sélectionnée en des première et deuxième parties de message, pour transmettre la première partie d'un tel message en tant que message non sélectionné à une station d'ordinateur hôte à distance (S2), et pour répondre à une demande de données supplémentaires provenant de ladite station d'ordinateur hôte à distance en transmettant la deuxième partie en tant que message sélectionné à ladite station d'ordinateur hôte à distance (S2).

7. Système selon l'une quelconque des revendications 1 à 6, dans lequel ledit module de communication interprocessus (100) est agencé pour demander, auxdites fonctions de gestion de mémoire (10M), une attribution de mémoire par unités, liée à une taille de message de réseau, dans lequel ledit module de communication interprocessus (100) est capable de fragmenter des messages à envoyer satisfaisant à une condition sélectionnée en une pluralité de fragments de message et de transmettre les fragments de message un par un à ladite station d'ordinateur à distance, et
ledit module de communication interprocessus (100) est capable, lors de la réception de fragments de message successifs, de les délivrer un par un à l'application de destination.

8. Système selon la revendication 7, dans lequel ladite condition sélectionnée comprend une condition liée à la taille du message.

9. Système selon la revendication 7, dans lequel ladite condition sélectionnée comprend une condition liée à un temps estimé de présence du message dans la mémoire de la station d'ordinateur à distance (S2), avant distribution.

10. Système selon l'une quelconque des revendications 7 à 9, dans lequel lesdites fonctions de traitement de message (100P) sont capables de traiter une partie de service de messages vers et en provenance de ladite station d'ordinateur, et ledit module de communication interprocessus (100) est agencé pour coopérer avec lesdites fonctions de traitement de message (100P) afin d'introduire une marque d'indication de fragment dans les fragments de message.

11. Système selon l'une quelconque des revendications 1 à 10, dans lequel lesdites fonctions de gestion de mémoire (10M) attribuent une mémoire par unités de mémoire tampon,
dans lequel ledit module de communication interprocessus (100) est agencé pour répondre à une application présentant une requête de transmission de message en :
- demandant, auxdites fonctions de gestion de mémoire, l'attribution d'une première unité de mémoire tampon, tout en bloquant cette application dans un état d'attente en attendant cette attribution,
- lors de l'attribution réelle de ladite première unité de mémoire tampon, plaçant dans celle-ci au moins une partie dudit message,
- si une partie seulement du message peut être contenue dans ladite première unité de mémoire tampon,
* demandant, auxdites fonctions de gestion de mémoire, l'attribution d'unités de mémoire tampon supplémentaires suffisantes pour contenir le reste du message,
* lors de l'attribution réelle rapide desdites unités de mémoire tampon supplémentaires, utilisant celles-ci pour la transmission du reste du message,
* autrement, passant dans un mode fragmenté de transmission du reste du message.

12. Système selon la revendication 11, dans lequel ledit mode fragmenté de transmission du reste du message utilise ladite première unité de mémoire tampon attribuée.

13. Procédé de transmission de messages entre des stations d'ordinateur, comprenant les étapes consistant à :
a) mémoriser un message à transmettre dans une première station d'ordinateur (S1),
b) envoyer le message à transmettre de la première station d'ordinateur (S1) à une deuxième station d'ordinateur (S2),
c) mémoriser le message reçu dans la deuxième station d'ordinateur (S2),
d) retirer par la suite le message de la mémoire dans ladite première station d'ordinateur (S1) et dans ladite deuxième station d'ordinateur (S2), en fonction de critères d'utilisation de message, dans lequel
l'étape a) comprend la mémorisation dudit message à transmettre dans une première partie de mémoire réservée (145) ou dans une autre partie de mémoire (147) de ladite première station d'ordinateur (S1), selon que le message satisfait ou non à une condition de mémorisation courte, et
l'étape c) comprend la mémorisation dudit message reçu dans une deuxième partie de mémoire réservée (246) ou dans une autre partie de mémoire (248) de ladite deuxième station d'ordinateur (S2), selon que ledit message reçu satisfait ou non à ladite condition de mémorisation courte.

14. Procédé selon la revendication 13, dans lequel l'étape a) comprend le marquage du message, lorsqu'il satisfait à ladite condition de mémorisation courte.

15. Procédé selon la revendication 13 ou 14, dans lequel l'étape d) comprend :
d1) l'envoi d'un accusé de réception de message par la deuxième station (S2) à la première station (S1), et
d2) le retrait du message de la mémoire dans ladite première station d'ordinateur (S1) lors de la réception de cet accusé de réception de message.

16. Procédé selon la revendication 15, dans lequel l'étape d) comprend en outre :
d3) le retrait du message de la mémoire dans ladite deuxième station d'ordinateur (S2) après un accès à celui-ci dans la deuxième station d'ordinateur.

17. Procédé selon la revendication 13, dans lequel ladite condition de mémorisation courte des étapes a) et c) est sélectionnée pour inclure au moins l'une des catégories de messages comprenant des réponses à des messages de requête et des restes de messages fragmentés lors d'une demande pour ceux-ci.

18. Procédé selon l'une quelconque des revendications 13 à 17, dans lequel :
- l'étape (a) comprend :
- (aa1) dans la première station d'ordinateur, la réception, d'une application source locale, d'une requête de transmission d'un message à une application de destination dans une deuxième station d'ordinateur,
- (aa2) la décision de transmettre le message sous forme fragmentée ou entière, selon que le message satisfait à une condition sélectionnée, et, dans le cas d'une transmission fragmentée,
- l'étape (b) comprend :
- (ba1) la transmission de fragments de message successifs à ladite deuxième station d'ordinateur,
- l'étape (c) comprend :
- (ca1) dans la deuxième station d'ordinateur, le transfert de chaque fragment de message reçu à l'application de destination locale.

19. Procédé selon l'une quelconque des revendications 13 à 18, dans lequel :
- l'étape (a) comprend :
- (ab1) lors de la réception d'une requête de transmission d'un message d'une application locale, la demande d'attribution d'une première unité de mémoire tampon pour ce message, tout en bloquant l'application locale demandeuse dans un état d'attente en attente de cette attribution,
- (ab2) lors de l'attribution réelle de ladite première unité de mémoire tampon, le placement dans celle-ci d'au moins une partie dudit message,
- (ab3) si une partie seulement du message peut être contenue dans ladite première unité de mémoire tampon,
(ab31) la demande, audites fonctions de gestion de mémoire, d'attribution d'unités de mémoire tampon supplémentaires suffisantes pour contenir le reste du message,
(ab32) lors de l'attribution réelle rapide desdites unités de mémoire tampon supplémentaires, l'utilisation de celles-ci pour la transmission du reste du message,
(ab33) autrement, le passage dans un mode de transmission fragmenté du reste du message.

20. Procédé selon la revendication 19, dans lequel, à l'étape (ab33), ledit mode de transmission fragmenté du reste du message utilise ladite première unité de mémoire tampon attribuée à l'étape (ab2).
